# EUROPEAN PATENT APPLICATION

(11) **EP 1 332 837 A1**
(43) Date of publication of application: **06.08.2003**
(21) Application number: 03425038.1
(22) Date of filing: 28.01.2003
(51) Int. Cl.: B25C 3/00

(54) **Tool for handling screws**

(30) Priority: 29.01.2002 IT BS20020004 U
(71) Applicant: Comaglio S.r.l., 25080 Muscoline (Brescia) (IT)
(72) Inventor: Comaglio, Aldo, 25085 Gavardo (Brescia) (IT); Vezzola, Caterina, 25085 Gavardo (Brescia) (IT)
(74) Representative: Manzoni, Alessandro

(57) **Abstract**

The present finding relates to a block for fixing U-shaped sections (1) to a support, such as a wall, provided with holes (4) at the bottom (2) comprising a body (5) sliding into the section, a rib (9) extending from the top surface of said body for gripping and handling it, and an overhang (11) consisting of two jaws defining a hole (12) intended to house a screw (13) for securing the section (1) to the support.

## Description

The present utility model relates to a sliding block intended to facilitate the fixing of sections of various materials, both metal and not, in the event the sections are substantially U-shaped and the height of the side walls is quite considerable.

### Prior art and object of the finding

As known, when U-shaped sections must be fixed to a support, such as a wall, there is the problem of centring the fastening screws into the holes obtained at the bottom of the section. The deeper the section, the more difficult the operation. Hence the use, for example, of magnetic screwdrivers for holding the screws and facilitate their introduction into the section holes and their subsequent tightening. However, such solution is not safe especially when the section to be secured is in vertical position, and thus the screws are on a horizontal plane. Another unsafe solution is the use of screw gripping pliers. The limit of this solution is given by the width of the section groove, that requires the use of small sized tools that are not always effective.

Purpose of the present finding is that of eliminating the difficulties and problems mentioned above by adopting a sliding block into the section, said block being provided with screw holding means for facilitating their introduction into the section holes and the subsequent fixing to the support.

The object of the model under discussion shall appear more clearly with reference to the attached indicative and non-limiting examples, wherein:
- Figure 1 shows a perspective view of the block of the finding, housed into a U-shaped section; and
- Figures 2 and 3 show a cross-section view of the section and of the block, respectively before and after tightening a screw.

in such drawing, reference numeral 1 globally denotes a section, for example U-shaped, exhibiting a bottom 2 and side walls 3. Moreover, a plurality of holes 4 is provided on the bottom 2 of the section. According to the finding, a block 5 is provided, having a width complementary to hole 2 of section 1. Moreover, on its sides 6, block 5 exhibits beads 7 adapted for introducing as guides into corresponding grooves 8 provided on the side walls 3 of section 1, thereby allowing block 5 to slide into said section 1.

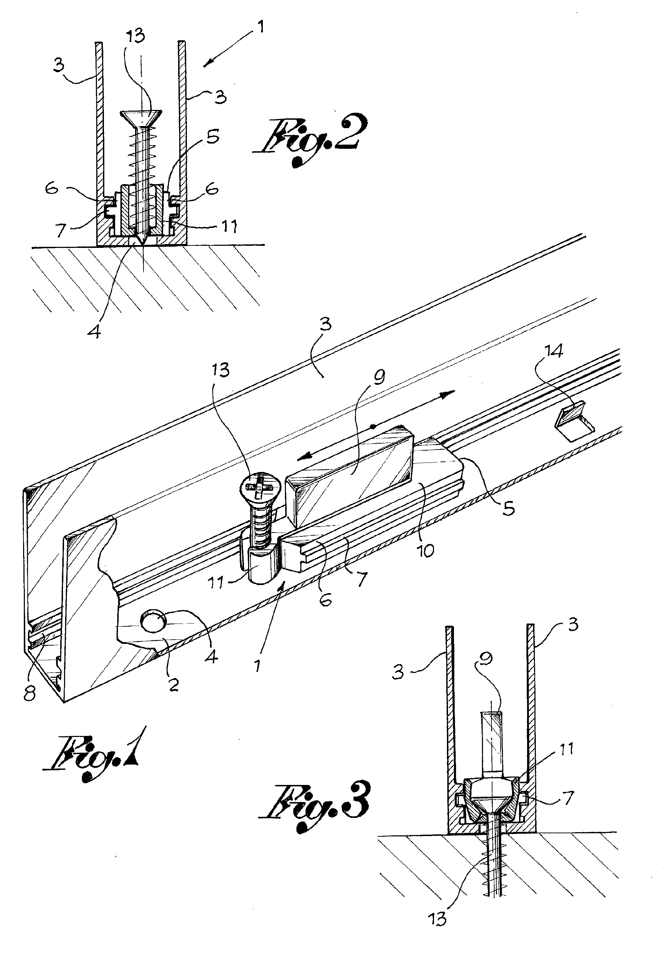

Block 5 also exhibits a rib 9 suitably inserted onto its top surface 10, said rib 9 acting as gripping means for sliding and positioning block 5 into the section. Finally, block 5 exhibits an overhang 11 consisting of two jaws that define a hole 12 intended to house a screw 13 for securing section 1 to a support, such as a wall, such overhang 11 being sufficiently elastic to deform when the head of screw 13 is tightened thoroughly into the support (see Figure 3).

According to the finding, an abutment 14 may be provided at the bottom 2 of section 1, acting as limiter to the sliding of block 5.

The block operation is clear from the above description.

Once screw 13 has been partly tightened into overhang 11, block 5 is introduced into section 1 and arranged so that overhang 11 is at the holes 4; screw 13 is further tightened until it partly engages hole 4, keeping block 5 still, thereby allowing the subsequent tightening of screws 13 into the fixing support of section 1.

The solution illustrated in the model under discussion may advantageously be used, by way of an example, for securing door anti-draught devices or for fixing shower box sections to a wall.

## Claims

1. Sliding block for fixing U-shaped sections (1) to a support, such as a wall, provided with holes (4) at the bottom (2), **characterised in that** it exhibits a body (5) provided with side tabs (7) arranged on its sides (6), intended to engage into a groove (8) provided on the side walls (3) of the section (1) so as to allow the block sliding.

2. Sliding block according to claim 1, **characterised in that** a rib (9) is provided on its top surface (10) for gripping and handling the body (5).

3. Sliding block according to the previous claims, **characterised in that** the body (5) exhibits an overhang (11) consisting of two jaws defining a hole (12) intended to house a screw (13) for securing the section (1) to a support.

4. Sliding block according to claim 3, **characterised in that** the overhang (11) can be deformed by the head of the screw (13) following its thorough tightening into the fixing support.
